# EUROPEAN PATENT APPLICATION

(11) **EP 4 650 333 A1**
(43) Date of publication of application: **19.11.2025**
(21) Application number: 24305753.6
(22) Date of filing: 15.05.2024
(51) Int. Cl.: C04B 28/04, C04B 28/08, C04B 28/14, C04B 28/16, C04B 111/00, C04B 22/14, C04B 20/00, C04B 18/10, C04B 18/12, C04B 7/02

(54) **QUATERNARY BINDERS WITH CLINKER, BIOMASS ASHES, BLAST FURNACE SLAG AND CALCIUM SULFATE FOR MINING APPLICATIONS**

(71) Applicant: Holcim Technology Ltd, 6300 Zug (CH)
(72) Inventor: BROUARD, Eric, 38070 SAINT QUENTIN FALLAVIER (FR); GELIN, Charlène, 38070 SAINT QUENTIN FALLAVIER (FR); VERT, Clément, 38070 SAINT QUENTIN FALLAVIER (FR)
(74) Representative: Regimbeau

(57) **Abstract**

The disclosure relates to a binder comprising from 3% to 15% w/w of Portland clinker, from 7% to 20% w/w of calcium sulfate, from 5% to 35% w/w of a biomass ash, and from 40% to 80% w/w of blast furnace slag. The disclosure further relates to a composition comprising said binder and to a process of preparing a backfill material, comprising mixing mine tailings, the binder according to the disclosure and water.

## Description

The disclosure relates to a binder comprising Portland clinker, calcium sulfate, a biomass ash, and blast furnace slag. The disclosure further relates to a composition comprising said binder, and particularly to a backfill material composition. The disclosure further relates to the process of preparing a backfill material, comprising mixing mine tailings with water and the binder according to the disclosure.

### BACKGROUND

In mining operations, ore is extracted and is treated to separate the valuable elements from the uneconomic fraction, the gangue. The ore is treated both mechanically and chemically, and in most cases, it is ground into particles. The resulting finely ground gangue is referred to as tailings, which consist of a slurry composed of fine particles, ranging from the size of a grain of fine sand to a few micrometers. Mine tailings are usually produced from milling in slurry form, which is a mixture of fine mineral particles and water. Some chemicals that are used to extract elements of interest from the ore can also remain in the slurry.

The target elements to be extracted being at a low concentration in the ore, very high amounts of tailing are generated and need to be managed and disposed above ground in tailings storage facilities such as tailings ponds or dry stacks. Mines try always to minimize the amount of tailings stored above ground.

One way of storing mine tailings is by backfilling, where a hydraulic binder, most often a Portland cement, is mixed with mine tailings to prepare a backfill material which is then gravity fed or pumped into unused cavities in a mine and left to harden. Up to 60% of the total amount of tailings of a mine can been used to make backfill materials.

Backfilled stops provide ground stabilization, avoid local subsidence, permit mining of the adjacent stops in a shorter period of time and limit "dilution" of ore in the adjacent stops, while reducing the amount of tailings for surface disposal.

The most common binders to make backfills materials used to fill in stops of underground mines are CEM I and some composite cements such as CEM II/B type cements. CEM I type cements give good mechanical properties to backfill materials, but this type of cement is not recommended for sulfur-rich backfill materials. Many tailings that are used to make backfill materials, containing large amounts of sulfide minerals such as pyrite. Oxidation of these specific minerals generates acids. Hydrates of CEM I type cements do not resist well to acidic conditions and drop of mechanical strengths are often observed in such acidic environments. CEM II/B type cements are far less expensive than CEM I, so this kind of cement is often selected for this reason. CEM II/B type cements give lower mechanical strengths than CEM I and their hydrates do not resist better to acidic conditions than those of CEM I type cements.

By contrast, hydrates of blast furnace slag-rich binders are well known to resist far better to these conditions thanks to the lower calcium / silica ratio of their calcium silicate hydrates and far lower amount of calcium hydroxide hydrate.

However, to reduce their CO₂ emissions, steel makers have already started to replace some of their blast furnaces with direct reduced iron (DRI) furnaces. These new furnaces do not generate slag.

Furthermore, the production of Portland clinker necessitates considerable amounts of energy, thereby generating an important portion of the cement industry CO₂ emissions.

There is therefore a need to find alternative materials to be used in the backfill formulations to replace blast furnace and/or Portland clinker without deteriorating the mechanical properties of the backfill material and that advantageously are compatible with sulfur-rich tailings.

### SUMMARY

It was surprisingly found by the inventors that the association of Portland clinker, calcium sulfate, blast furnace slag and a biomass ash, is particularly suitable as a binder for backfill materials that addresses the aforementioned shortcomings.

Advantageously, replacing part of the blast furnace slag by biomass ash not only addresses the expected shortages in availability of blast furnace slag but also maintains or even improves the mechanical properties of the obtained binder and backfill materials.

Still more advantageously, the incorporation of the biomass ash in the binder of the disclosure allows not only limiting the necessary amounts of blast furnace slag but also the necessary amount of Portland clinker, thereby supplying a more energy efficient and environmentally friendly binder.

The inventors have demonstrated that, compared to conventional backfill material binders, the binder of the disclosure, enables reduced amounts of Portland clinker and blast furnace slag, and presents significantly improved compressive strength. The inventors have also demonstrated that the binder, referenced herein as a quaternary binder, when mixed with mine tailings and water, supplies backfill materials that present significantly improved compressive strength compared to conventional CEM II/B based backfill materials. It is also of note that such effect could be observed, regardless of the sulfur amount in the mine tailings used for the preparation of the assessed backfill materials.

The disclosure is directed to a process of preparing a backfill material, comprising mixing mine tailings, a binder and water, wherein the binder comprises, in weight relative to the total weight of the binder: a) from 3% to 15% w/w of Portland clinker, b) from 7% to 20% w/w of a calcium sulfate, c) from 5% to 35% w/w of a biomass ash, and d) from 40% to 80% w/w of blast furnace slag.

Advantageously, the binder comprises, in weight relative to the total weight of the binder:
a) from 5% to 12% w/w of Portland clinker, b) from 7% to 15% w/w of a calcium sulfate,
c) from 20% to 35% w/w of a biomass ash, and d) from 40% to 70% w/w of blast furnace slag.

Advantageously, the biomass ash comprises more than 23%, preferably more than 35%, more preferably more than 45% w/w of silicon dioxide, in weight relative to the total weight of the biomass ash.

The biomass ash is typically a plant material ash selected from woody residues ash, agricultural residues ash or herbaceous ash. Advantageously, the biomass ash can be selected from woody ash, rice husk ash, cocoa pods ash, miscanthus ash, or mixtures thereof. More advantageously, the biomass ash is woody ash, rice husk ash, or mixtures thereof. The biomass ash can present and advantageous particle size distribution presenting a D50 of less than or equal to 50 µm.

The calcium sulfate can be provided in the form of gypsum, bassanite, anhydrite or mixtures thereof, preferably the calcium sulfate is provided in the form of gypsum.

Advantageously, the process of the present disclosure comprises the steps of i) providing a binder as described hereinabove, then ii) mixing the binder with water and mine tailings, thereby obtaining a backfill material.

Advantageously, the binder is in an amount ranging from 2% to 15%, preferably from 3% to 8% w/w, in weight relative to the backfill material.

Advantageously, the ratio of the total solids fraction to the total weight of backfill material is from 60% to 85%.

Thee mine tailings can be advantageously from a mine extracting at least one of gold, silver, copper, zinc, uranium, platinum, palladium, nickel, beryllium, cobalt, chromium, gallium, indium, lead, lithium, magnesium, manganese, molybdenum, aluminum, barium, antimony, bismuth, tantalum, titanium, tungsten, vanadium, iron, diamonds, sapphires, opals, emeralds, rubies, graphite, alexandrite, aquamarines, spinel, topaz, cadmium, potash, a rare earth element, a platinum group metal, or mixtures thereof

The disclosure further relates to a binder as described herein above. The disclosure also relates to a composition, preferably a backfill material composition, comprising the binder of the disclosure, in association with mine tailings. Advantageously, such composition comprises at least 60% w/w of mine tailings, in weight relative to the total weight of the composition.

The advantages of the disclosed invention are as follows:
- improvement of the mechanical performances at 7 days and 28 days,
- advantageous supplying for the binder manufacture due to the use of lower contents of blast furnace slag,
- low carbon footprint, due to the use of low contents of Portland clicker, without any detrimental effect on the mechanical performances.

### DEFINITIONS

D90, also denoted DV90, corresponds to the 90^{th} percentile of the volume distribution of particle size i.e. 90 % of the particles are of size less than D90 and 10 % are of size greater than D90. Similarly, D50 also denoted DV50, corresponds to the 50^{th} percentile of the volume distribution of particle size i.e. 50 % of the particles are of size less than D50 and 50% are of size greater than D50. Similarly, D10 also denoted DV10, corresponds to the 10^{th} percentile of the volume distribution of particle size i.e. 10 % of the particles are of size less than D10 and 90 % are of size greater than D10.

The pulp density corresponds to the percentage of solids fractions (dry fraction of tailings and binder) in the backfill material.

The binder content corresponds to the percentage of binder in the total solid fraction (dry fraction of tailings and binder) of the backfill material.

### DETAILED DESCRIPTION OF EMBODIMENTS OF THE INVENTION

### 1. Binder

The disclosed invention concerns a binder comprising, in weight relative to the total weight of the binder:
a) from 3% to 15% w/w of Portland clinker,
b) from 7% to 20% w/w of a calcium sulfate,
c) from 5% to 35% w/w of a biomass ash, and
d) from 40% to 80% w/w of blast furnace slag.

Advantageously, the binder comprises in weight relative to the total weight of the binder:
a) from 5% to 12% w/w of Portland clinker,
b) from 7% to 15% w/w of a calcium sulfate,
c) from 20% to 35% w/w of a biomass ash, and
d) from 40% to 70% w/w of blast furnace slag.

According to an exemplary embodiment, the binder comprises, in weight relative to the total weight of the binder:
a) from 5% to 12% w/w of Portland clinker,
b) from 7% to 12% w/w of a calcium sulfate,
c) from 20% to 30% w/w of a biomass ash, and
d) from 50% to 60% w/w of blast furnace slag.

Advantageously, the binder comprises at least 85 % w/w, preferably 90% w/w, even more preferably 95% w/w, with respect to the total weight of the binder, of the above mixture of Portland cement, calcium sulfate, biomass ash and blast furnace slag.

According to some preferred embodiments, the binder according to the present disclosure is suitable to be mixed with water and mine tailings for preparing a backfill material.

### 1. Portland clinker and blast furnace slag

Portland clinker is as defined in Cement Standard NF EN 197-1 of April 2012.

Advantageously, the binder comprises, with respect to the total weight of the binder, from 5 % w/w to 12 % w/w of Portland clinker, preferably from 9 % w/w to 11 % w/w of Portland clinker. Blast furnace slag is as defined in Cement Standard NF EN 197-1 of April 2012. Preferably, the blast-furnace slag is a ground granulated blast furnace slag. Ground granulated blast furnace slag can be noted as GGBFS. It is a component of metallurgic cement and is typically as defined in the European NF EN 197-1 Standard of April 2012, paragraph 5.2.2. Advantageously, the binder comprises, with respect to the total weight of the binder, from 40 % w/w to 70 % w/w of blast furnace slag, preferably from 50 % w/w to 60 % w/w of blast furnace slag.

### 2. Calcium sulfate

Calcium sulfate may be provided in the form of various sources, such as gypsum, anhydrite or hemihydrate (bassanite). Preferably, calcium sulfate is provided in the form of gypsum.

Gypsum is calcium sulfate dihydrate, with the chemical formula CaSO₄.2H₂O. Gypsum exists in the natural state. Alternative sources of calcium sulfate include phosphogypsum and sulfogypsum. Sulfogypsum is a byproduct formed during the production of phosphoric acid or from the treatment of sulfur dioxide emissions from power plants. It is a calcium sulfate material similar to gypsum but with additional sulfates. Phosphogypsum is a byproduct of the production of phosphoric acid, which is used in the manufacture of fertilizers and other products. It is formed when phosphate rock is treated with sulfuric acid to produce phosphoric acid. Anhydrite is a mineral composed of calcium sulfate (CaSO₄) without any water molecules bound within its crystal structure. It occurs in sedimentary deposits and is often associated with evaporite deposits. Hemihydrate (CaSO₄. 0.5H₂O) is a compound formed when one water molecule is combined with each calcium sulfate molecule.

Calcium sulfate produced as a by-product of certain industrial processes may also be used. Advantageously, the binder comprises, with respect to the total weight of the binder, from 7 % w/w to 15 % w/w of calcium sulfate, preferably from 7 % w/w to 12 % w/w of calcium sulfate.

### 3. Biomass ash

Biomass ash is generally obtained from the calcination of a plant material, preferably of a plant waste material. For instance, biomass which may be used according to the present disclosure, makes it possible to obtain 10 to 20 % by mass of ash relative to the mass of plant waste material before calcination Advantageously, the biomass ash comprises more than 23% w/w, preferably more than 35% w/w, more preferably more than 45% w/w, such as for example from more than 45% w/w to 95% w/w of silicon dioxide, in weight relative to the total ash weight.

The biomass ash may be selected from woody ash, rice husk ash, cocoa pods ash, miscanthus ash, or mixtures thereof. Advantageously, the biomass ash may be selected from woody ash, rice husk ash, or mixtures thereof.

Advantageously, the biomass ash has a particle size distribution presenting a D50 of less than or equal to 50 µm. In some embodiments, the biomass ash has a particle size distribution presenting a D50 ranging from 20 µm to 50 µm, such as from 20 µm to 40 µm. Advantageously, the binder comprises, with respect to the total weight of the binder, from 20 % w/w to 35% w/w of biomass ash, preferably from 20 % w/w to 30 % w/w of biomass ash.

### 4. Optional further components

Optional component, if any, preferably satisfies the requirements of the Cement Standard NF EN 197-1 of April 2012.

Additional additives such as water-reducers, accelerators or retarders, stabilizing agents and / or defoaming agents could be added.

A water reducer is defined as an additive which reduces the amount of mixing water of concrete for a given workability by typically 10 - 15% for conventional water-reducer. Water reducers include, for example lignosulphonates, hydroxycarboxylic acids, carbohydrates, and other specialized organic compounds, for example glycerol, polyvinyl alcohol, sodium alumino-methyl-siliconate, sulfanilic acid and casein.

Superplasticizers are water reducers that are capable of reducing water contents of mixing water, for a given workability, by up to 30% by weight of backfill while maintaining suitable fluidity, or that are capable of improving the flowability of the material for a given water content. Examples of superplasticizers are sulphonated naphthalene formaldehyde condensate (SNF) (generally a sodium salt); sulphonated melamine formaldehyde condensate (SMF); modified lignosulfonates (MLS); polycarboxylic compounds such as polycarboxylates, e.g. polyacrylates. The superplasticizer can be a copolymer containing polyethylene glycol as graft chain and carboxylic functions in the main chain such as a polycarboxylic ether; sodium polycarboxylate-polysulphonates; sodium polyacrylates; phosphonic acid derivatives. Preferably, the superplasticizer is a phosphonate-based admixture, or a polycarboxylate ether based admixture. The binder may contain more than one type of superplasticizer. In particular, the binder may contain both, a phosphonate-based admixture and a polycarboxylate ether based admixture.

The defoaming agent results in a reduction of the air content of the backfill material and thus in an increased density. Preferably, a polyether is used as said defoaming agent.

In particular, the combination of a superplasticizer and a defoaming agent is especially useful for decreasing the amount of air that is entrained in the mixture as a result of the addition of the superplasticizer.

The binder may also contain a stabilizing agent. A viscosity modifying agent is preferably used as said stabilizing agent, wherein the effect of the addition of a stabilizing agent is to avoid segregation and bleeding of the backfill material. Advantageously, the stabilizing agent is a diutan gum. Advantageously, the binder comprises preferably a stabilizing agent in an amount from 0.2% to 2% w/w, in weight relative to the total dry binder weight.

### 2. Process of preparing a backfill material

According to a further aspect, the disclosure concerns a process of preparing a backfill material, comprising mixing the binder according to the disclosed invention with mine tailings. The process may comprise (i) providing a binder according to any one of the hereinabove described embodiments, then (ii) mixing the binder with water and wet mine tailings or with a slurry of mine tailings and optional additional water, thereby obtaining a backfill material. Mine tailings refer to a particulate composition presenting fine particles, ranging from the size of a grain of fine sand to a few micrometers. Mine tailings result from the separation of metals of interest from ore. Mine tailings are the finely ground residue from ore extraction. The grain size of the tailings depends on the nature of the ore and the milling process. Mine tailings may be in the form of a slurry or a cake.

Preferably, the mine tailings are from a mine extracting at least one of gold, silver, copper, zinc, uranium, platinum, palladium, nickel, beryllium, cobalt, chromium, gallium, indium, lead, lithium, magnesium, manganese, molybdenum, aluminum, barium, antimony, bismuth, tantalum, titanium, tungsten, vanadium, iron, diamonds, sapphires, opals, emeralds, rubies, graphite, alexandrite, aquamarines, spinel, topaz, cadmium, potash, a rare earth element, a platinum group metal, or mixtures thereof.

According to some advantageous embodiments, the mine tailings comprise, in weight relative to the total weight of the mine tailings, more than 1 %, preferably more than 3% w/w of SO₃⁻. Advantageously, from 2% to 15%, preferably from 5% to 10% w/w of the binder of the disclosure, in weight relative to the total solid fraction, is mixed with the mine tailing. Advantageously, the water and mine tailings contents are such that the obtained backfill material has a pulp density ranging from 60% w/w to 85% w/w, in weight relative to the total weight of the backfill material.

### 3. Composition suitable as backfilling material

According to a further aspect, the disclosure concerns a composition comprising the binder according to the disclosure in association with mine tailings, as described above.

According to some embodiments, the composition comprises at least 60% w/w of mine tailings, in weight relative to the total weight of the composition.

Advantageously, the composition is a backfill material. Advantageously, the composition is a mine backfilling material obtained by the process of preparing a backfill material as described herein above.

Advantageously, the ratio of the total solids fraction to the total weight of the composition, preferably the backfill material composition, is from 60% to 85%, such as for example from 68% to 75%.

The composition, preferably a backfill material composition, may comprise from 2% to 15%, preferably from 3% to 8% w/w of the binder of the disclosure, in weight relative to the total weight of the composition.

### METHODS

### Blaine fineness

Blaine fineness is measured at 20°C at a relative humidity not exceeding 65% using a Blaine Euromatest Sintco apparatus in accordance with European Standard EN 196-6:2018.

### Particle size distribution

In the present description and accompanying claims, the particle size distribution is measured by laser particle size analysis, e.g. using a Malvern MS2000 laser analyzer. Measurement is performed in ethanol. The light source is a red He-Ne laser (632 nm) and blue diode (466 nm). The optical model is the Mie model and the computing matrix of polydisperse type. The apparatus is calibrated before each work session using a standard sample (C10 silica, Sibelco) with known particle size distribution. Measurement is carried out with the following parameters: pump rate 2300 rpm and stirrer speed of 800 rpm. The sample is positioned to obtain 10 to 20 % obscuration. Measurement is conducted after stabilization of obscuration. 80 % sonication is emitted for 1 minute to ensure de-agglomeration of the sample. After about 30 seconds (to evacuate any air bubbles) the sample is measured for 15 seconds (15000 images analyzed). Without emptying the cell, the measurement is repeated at least twice to verify the stability of the result and evacuation of any bubbles.

All the measurements given in the description and specified ranges correspond to the mean values obtained with sonication.

### Loss on ignition

The material sample is submitted to calcination at 950°C for 45 minutes, allowing organic maters and volatile substances to escape, until its mass ceases to change. Loss on ignition (LOI) corresponding to sample mass prior to calcination m₀ minus the sample mass after calcination mi is then determined. The organic matter and volatile materials lost usually consist of "combined water" (hydrates and labile hydroxy-compounds), and carbon dioxide from carbonates or carbon. Sulfur of sulfides can be partly volatilized too.

### Compressive strength

The compressive strength is measured according to the EN 13 286-41 standard of July 2003, using a machine equipped with a 40kN load cell.

### Chemical analysis

The chemical analysis of the biomass and the tailings is carried out by wavelength dispersive X-ray fluorescence analysis (WDS - XRF).

The following non-restrictive examples illustrate embodiments of the disclosed invention.

### EXAMPLES

**Examples 1-4** assess the effect of blast furnace slag replacement by biomass material in different types of binders according to the disclosure.

**Example 5** shows the performance of the backfill material comprising binders of the disclosure in association with mine tailings.

Unless otherwise specified, w/w % of an entity refers to the percentage of its weight relative to the total weight of the composition comprising said entity.

### Materials:

### Binder materials

The source of the Portland **clinker** of the binders according to the examples is a CEM 152.5, Lafarge. The amount of Portland clinker in CEM I is 95-100% w/w.

The **blast furnace slag** for the binders according to the examples is a ground granulated blast furnace slag, GGBFS (Fos-sur-Mer plant, France).

**Biomass ashes** for the binders according to the examples are woody residues, agricultural residues and herbaceous ashes as per in table 1. Their chemical composition and particle size distribution are presented in tables 2 and 3 respectively.

**Table 1. biomass ashes for the binders according to the examples**

| Raw materials | Category | Origin |
|---|---|---|
| Wood ash | Woody residues ash | France |
| Rice Husk Ash (RHA) | Agricultural residues ash | India |
| Cotton ash | Agricultural residues ash | Burkina Faso |
| Cocoa pods ash | Agricultural residues ash | Ivory Coast |
| Miscanthus ash | Herbaceous ash | France |

**Table 2. biomass ash loss on ignition (LOI) and SiO₂ chemical analysis (%)**

| Biomass | LOI | SiO₂ (w/w) |
|---|---|---|
| Wood ash | 6.51 | 49.69 |
| Rice husk ash | 4.29 | 92.23 |
| Cotton ash | 12.98 | 23.53 |
| Cocoa pods ash | 27.01 | 38.38 |
| Miscanthus ash | 13.19 | 36.69 |

**Table 3. Biomass particles' size distribution**

| Biomass | D10 (µm) | D50 (µm) | D90 (µm) | Blaine fineness (cm²/g) |
|---|---|---|---|---|
| Wood ash | 4.37 | 39 | 142.6 | 4400 |
| Rice husk ash | 5 | 23 | 62.8 | 10920 |
| Cotton ash | 14.6 | 62.3 | 243.6 | 8050 |
| Cocoa pods ash | 14.2 | 102 | 587.7 | 2730 |
| Miscanthus ash | 15.9 | 74.9 | 630.6 | 6410 |

### Inert filler of the comparative binder

For the assessment step of the binders of the present disclosure (Examples 1-4), an inert siliceous filler (98.62% w/w SiOz) was used, replacing GGBFS, that served as a comparative example. This inert material does not react with cement hydrates and leads to homogeneous paste fill materials making the comparison between the tested mixtures easier.

### Mine tailings

Mine tailings (Tailing 1 and 2) for example 5 originate from gold mines in Mali and Uganda, respectively. Their chemical composition and particle size distribution are presented in tables 4 and 5 respectively.

**Table 4. Chemical composition of the mine tailings used in example 5**

| | Chemical analysis (% w/w) | | | |
|---|---|---|---|---|
| | Loss on Ignition (LOI) | SiO₂ | Metal oxides | Total SO₃⁻ |
| Tailing 1 | 8.30 | 56.31 | 31.6 | 3.58 |
| Tailing 2 | 7.91 | 57.66 | 33.5 | 1.12 |

**Table 5. Particle size distribution of the mine tailings used in example 5**

| | D10 (µm) | D50 (µm) | D90 (µm) |
|---|---|---|---|
| Tailing 1 | 6.3 | 83 | 302 |
| Tailing 2 | 4.51 | 24.76 | 164.73 |

### Reference binder

As a **reference binder,** the example 5 uses CEM II/B-L type cement (limestone cement) composed of:
- 63.5 % w/w CEM I 52.5 (Lafarge, Saint-Pierre-La-Cour cement plant, France),
- 1.5% w/w natural Gypsum dried at 60°C and ground (Holcim, Tecomán cement plant, Mexico), and
- 35% w/w limestone filler having a D50 of less than 200 µm (BL200 commercialized by Omya)

The w/w percentages being expressed in weight relative to the total dry weight of the binder.

### Methods:

### Preparation of the backfill material

To be able to compare all the tested biomass materials, the composition of the backfill materials of example 5 was the same for all the tested mixtures:
- 74% w/w Pulp Density (total solid fraction / total backfill material)
- 6% w/w binder expressed as binder / total solid fraction.

The backfill materials were prepared in laboratory by mixing dry tailings, CEM I, GGBFS, biomass ashes, gypsum and water by applying the following procedure:
1. Introduction of tailings and binder into the mixer. Mix for 30 sec at low speed (140 rpm) to homogenize the dry mixture.
2. Introduction of water in 30 seconds at low speed (140 rpm)
3. Mixing for 1 minutes more at low speed
4. Scrape manually the bowl with a blade for 30 seconds
5. Mixing for 30 seconds at high speed (285 rpm)

### Compressive strength assessment

The binders of examples 1-4 and backfill materials of example 5 were molded in 5x5x5 cm³ plastic molds and cured in a storage room at 20°C and 100% relative humidity until the measurement of their compressive strength at 7 and 28 days. Three cubes were broken at every testing age for every mixture, the mean value and the standard deviation were determined.

### Example 1: Effect of the wood ash and rice husk ash amount in the binder

In this first example, a series of three wood ash was tested and a series of three rice husk ash (RHA) binders, each series having biomass ash content of 10, 25 and 50% w/w in weight of the total weight of the binder.

All the mixtures with biomass ashes were compared with a reference binder, devoid of biomass ashes, made with 80% GGBFS.

As a comparative example, 25% of GGBFS was replaced by an inert siliceous filler.

In order to assess the effect of the biomass ash, the clinker and gypsum contents were kept constant.

The tested mixtures were:
- 10% clinker - 10% gypsum - **0% wood ash** - 80% GGBFS (Reference)
- 10% clinker - 10% gypsum - **10% wood ash** - 70% GGBFS
- 10% clinker - 10% gypsum - **25% wood ash** - 55% GGBFS
- 10% clinker - 10% gypsum - **50% wood ash** - 30% GGBFS
- 10% clinker - 10% gypsum - **10% RHA** - 70% GGBFS
- 10% clinker - 10% gypsum - **25% RHA** - 55% GGBFS
- 10% clinker - 10% gypsum - **50% RHA** - 30% GGBFS
- 10% clinker - 10% gypsum - **25% inert silica** - 55% GGBFS (comparative)

**Table 6. Compressive strengths measured on days 7 and 28 of the mixtures of Example 1**

| | Compressive strengths (MPa) | |
|---|---|---|
| Testing ages (days) | 7 | 28 |
| Reference (0% biomass ash, 80% GGBF) | 1.03 | 1.51 |
| 10% Wood Ash | 1.29 | 2.21 |
| 25% Wood Ash | 1.15 | 2.23 |
| 50% Wood Ash | 0.55 | 1.39 |
| 10% RHA | 0.91 | 1.79 |
| 25% RHA | 0.69 | 2.07 |
| 50% RHA | 0.34 | 0.59 |
| Comparative (25% inert silica) | 0.75 | 1.39 |

It is of note that, unlike biomass ash, the inert filler does not have any positive effect on compressive strength. Furthermore, based on the inclusion of two different biomass ashes, the inclusion of a biomass ash in an amount of more than 10% w/w and inferior or equal to 50 % w/w can not only replace the GGBFS in a sustainable manner but also, in a surprising manner, improve the mechanical properties of the binder.

### Example 2: Effect of the gypsum amount in the binder

In this example, three mixtures are assessed with various percentages of gypsum: 5, 10 and 15%.

The tested mixtures were:
- 10% clinker - **5% gypsum** - 25% RHA - 60% GGBFS
- 10% clinker - **10% gypsum** - 25% RHA - 55% GGBFS
- 10% clinker - **15% gypsum** - 25% RHA - 50% GGBFS

**Table 7. The compressive strengths measured on the mixtures of Example 2**

| | Compressive strengths (MPa) | |
|---|---|---|
| Testing ages (days) | 7 | 28 |
| 5% Gypsum | 0,55 | 0,93 |
| 10% Gypsum | 0,69 | 2,07 |
| 15% Gypsum | 0,65 | 1,67 |

These results show that, while keeping the clinker and biomass ash contents constant, the optimal mechanical strength is obtained at more than 5% gypsum and less than 15% gypsum.

### Example 3: Effect of the clinker amount in the binder

In these mixtures the gypsum and RHA contents were constant. The amount of clinker in the tested CEM I being 95%, the amount of CEM I and clinker can be deduced as follows.

The tested mixtures were:
- **5% clinker** - 10% gypsum - 25% RHA - 60% GGBFS
- **10% clinker** - 10% gypsum - 25% RHA - 55% GGBFS
- **20% clinker** - 10% gypsum - 25% RHA - 45% GGBFS
- **30% clinker** - 10% gypsum - 25% RHA - 35% GGBFS

The compressive strengths measured on these mixtures are presented in table 8.

**Table 8. The compressive strengths measured on the mixtures of Example 3**

| | Compressive strengths (MPa) | |
|---|---|---|
| Testing ages (days) | 7 | 28 |
| 5% clinker | 0.57 | 1.75 |
| 10% clinker | 0.69 | 2.07 |
| 20% clinker | 0.70 | 1.19 |
| 30% clinker | 0.87 | 1.63 |

These results show that, while keeping the gypsum and biomass ash contents constant, the optimal mechanical strength is obtained at more than 5% clinker and less than 30% clinker.

### Example 4: Further Wood ash-based binders

In this example, a series of two wood ash-based binders were tested, wherein the wood ash presented a different particle size distribution. Each series had biomass ash content of 25 % w/w in weight of the total weight of the binder.

**Table 9. Particle size distribution of the wood ashes used in example 4**

| Biomass | D10 (µm) | D50 (µm) | D90 (µm) | Blaine fineness (cm²/g) |
|---|---|---|---|---|
| Wood ash 1 | 4.37 | 39 | 142.6 | 4400 |
| Wood ash 2 | 3.9 | 21.2 | 76.3 | 4600 |

The tested mixtures were:
- 10% clinker - 10% gypsum - **0% wood ash** - 80% GGBFS (Reference)
- 10% clinker - 10% gypsum - **25% wood ash 1** - 55% GGBFS
- 10% clinker - 10% gypsum - **25% wood ash 2** - 55% GGBFS
- 10% clinker - 10% gypsum - Inert Silica - 55% GGBFS (Comparative)

**Table 10. The compressive strengths measured on the mixtures of Example 4**

| | Compressive strengths (mPa) | |
|---|---|---|
| Testing ages (days) | 7 | 28 |
| Reference (0% biomass ash, 80% GGBF) | 1.03 | 1.51 |
| 25% Wood Ash 1 | 1.15 | 2.23 |
| 25% Wood Ash 2 | 0.95 | 2.03 |
| Comparative (25% inert silica) | 0.75 | 1.39 |

### Example 5: Implementation of the binder with mine tailings

In the following example the CEM II/B-L cement is the reference binder.

### 1. Mine Tailing 1

In this study, quaternary binders with several biomass ashes were tested. In these mixtures, the clinker, gypsum, GGBFS and ashes contents were constant.

Tailing use is tailing 1, came from a gold mine in Mali.

The tested mixtures are: 10% clinker - 10% gypsum - **25% biomass ashes** - 55% GGBFS

The compressive strengths measured on these mixtures are presented in table 11.

**Table 11. The compressive strengths measured on the backfill materials with tailing 1.**

| | Compressive strengths (mPa) | |
|---|---|---|
| Testing ages (days) | 7 | 28 |
| Ref - 100% CEM II/B | 0.20 | 0.39 |
| 25% Wood ash 1 | 1.25 | 2.69 |
| 25% RHA | 0.96 | 2.54 |
| 25% Cocoa pods | 0.61 | 1.81 |
| 25% Cotton | 0.73 | 1.99 |
| 25% Miscanthus | 0.78 | 2.08 |

All the tested mixtures with biomass ashes give strength that are high enough to meet the requirements for mine backfills.

### 2. Mine Tailing 2

In this final study, we tested quaternary binders according to the disclosed invention with second mine tailings, from a gold mine in Uganda.

The tested mixtures are: 10% clinker - 10% gypsum - **25% biomass ashes** - 55% GGBFS The compressive strengths measured on these mixtures are presented in table 12.

**Table 12. The compressive strengths measured on the backfill materials with tailing 2.**

| | Compressive strengths (mPa) | |
|---|---|---|
| Testing ages (days) | 7 | 28 |
| Ref - 100% CEM II/B | 0.22 | 0.26 |
| 25% Wood ash | 0.56 | 1.28 |
| 25% RHA | 0.46 | 1.05 |
| 25% Cocoa pods | 0.28 | 0.78 |
| 25% Cotton | 0.30 | 0.94 |
| 25% Miscanthus | 0.35 | 1.05 |

From these three results it can be concluded that a quaternary binder, containing biomass ashes and GGBFS can be a good alternative to make backfill and any materials containing large amounts of mine tailings.

## Claims

1. Process of preparing a backfill material, comprising mixing mine tailings, a binder and water, wherein the binder comprises, in weight relative to the total weight of the binder:
a) from 3% to 15% w/w of Portland clinker,
b) from 7% to 20% w/w of a calcium sulfate,
c) from 5% to 35% w/w of a biomass ash, and
d) from 40% to 80% w/w of blast furnace slag.

2. The process according to claim 1, wherein the wherein the binder comprises, in weight relative to the total weight of the binder:
a) from 5% to 12% w/w of Portland clinker,
b) from 7% to 15% w/w of a calcium sulfate,
c) from 20% to 35% w/w of a biomass ash, and
d) from 40% to 70% w/w of blast furnace slag.

3. The process according to claim 1 or claim 2, wherein the biomass ash comprises more than 23%, preferably more than 35%, more preferably more than 45% w/w of silicon dioxide, in weight relative to the total weight of the biomass ash.

4. The process according to any one of claims 1 to 3, wherein the biomass ash is a plant material ash selected from woody residues ash, agricultural residues ash or herbaceous ash.

5. The process according to any one of claims 1 to 4, wherein the biomass ash is selected from woody ash, rice husk ash, cocoa pods ash, miscanthus ash, or mixtures thereof.

6. The process according to any one of claims 1 to 5, wherein the biomass ash is woody ash, rice husk ash, or mixtures thereof.

7. The process according to any one of claims 1 to 6, wherein the biomass ash has a particle size distribution presenting a D50 of less than or equal to 50 µm.

8. The process according to any one of claims 1 to 7, wherein the calcium sulfate is provided in the form of gypsum, bassanite, anhydrite or mixtures thereof, preferably the calcium sulfate is provided in the form of gypsum.

9. The process according to any one of claims 1 to 8, comprising the steps of:
i) providing a binder, as described in any one of claims 1 to 8, then
ii) mixing the binder with water and mine tailings, thereby obtaining a backfill material.

10. The process according to any one of claims 1 to 9, wherein the binder is in an amount ranging from 2% to 15%, preferably from 3% to 8% w/w, in weight relative to the backfill material.

11. The process according to any one of claims 1 to 10, wherein the ratio of the total solids fraction to the total weight of backfill material is from 60% to 85%.

12. The process according to any one of claims 1 to 11, wherein the mine tailings are from a mine extracting at least one of gold, silver, copper, zinc, uranium, platinum, palladium, nickel, beryllium, cobalt, chromium, gallium, indium, lead, lithium, magnesium, manganese, molybdenum, aluminum, barium, antimony, bismuth, tantalum, titanium, tungsten, vanadium, iron, diamonds, sapphires, opals, emeralds, rubies, graphite, alexandrite, aquamarines, spinel, topaz, cadmium, potash, a rare earth element, a platinum group metal, or mixtures thereof.

13. A binder as described in any one of claims 1 to 8.

14. A composition, preferably a backfill material composition, comprising the binder according to claim 13 in association with mine tailings.

15. The composition according to claim 14, wherein said composition comprises at least 60% w/w of mine tailings, in weight relative to the total weight of the composition.
